# EUROPEAN PATENT APPLICATION

(11) **EP 4 832 464 A1**
(43) Date of publication of application: **28.10.2026**
(21) Application number: 25182741.6
(22) Date of filing: 13.06.2025
(51) Int. Cl.: H04M 1/04, B60R 11/02, H02J 7/00

(54) **MAGNETIC MOBILE PHONE HOLDER CAPABLE OF AUTOMATIC POSITIONING AND LOCKING**

(30) Priority: 25.04.2025 CN 202520796775 U
(71) Applicant: Dongguan Jinchi Electronic Technology Co., Ltd., Dongguan City (CN)
(72) Inventor: DU, Pengcheng, Dongguan City (CN)
(74) Representative: Chung, Hoi Kan

(57) **Abstract**

Provided is a magnetic mobile phone holder capable of automatic positioning and locking, including a base support, a positioning plate, and a mobile phone protection shell, where the positioning plate is fixedly mounted on the mobile phone protection shell, and the base support is connected to the positioning plate. The base support includes a housing, a positioning protrusion is arranged at a top of the housing, and positioning grooves are formed at both ends of the positioning protrusion. An elastically compressible pressing key is mounted at either of two inner ends of the housing, a latch tongue is fixedly arranged on the pressing key, the latch tongue extends into the positioning groove, a top of the latch tongue is flush with a top of the positioning protrusion, and a first tangent plane is arranged at one end of the latch tongue away from the positioning protrusion.

## Description

### TECHNICAL FIELD

The present invention relates to the technical field of mobile phone holders, and specifically relates to a magnetic mobile phone holder capable of automatic positioning and locking.

### BACKGROUND

Mobile phone holders for automobiles and outdoor cycling vehicles in the prior art cannot easily switch between landscape and portrait modes, and disassembly is required for switching between landscape and portrait modes. Additionally, during driving, a mobile phone may be detached from the holder due to sudden strong vibrations or improper manual operations. To overcome the defect that the mobile phone is not clamped by the mobile phone holder tightly, the present invention provides a magnetic mobile phone holder capable of automatic positioning and locking.

### SUMMARY

An objective of the present invention is to provide a magnetic mobile phone holder capable of automatic positioning and locking, so as to solve the technical problems mentioned in the above Background.

To achieve the above objective, the present invention adopts the following technical solution:
A magnetic mobile phone holder capable of automatic positioning and locking, including a base support, a positioning plate, and a mobile phone protection shell, where the positioning plate is fixedly mounted on the mobile phone protection shell, and the base support is connected to the positioning plate:
the base support includes a housing, a positioning protrusion is arranged at a top of the housing, and positioning grooves are formed at both ends of the positioning protrusion;
an elastically compressible pressing key is mounted at either of two inner ends of the housing, a latch tongue is fixedly arranged on the pressing key, the latch tongue extends into the positioning groove, a top of the latch tongue is flush with a top of the positioning protrusion, and a first tangent plane is arranged at one end of the latch tongue away from the positioning protrusion;
an insertion end is arranged at one end of the positioning plate close to the base support, a second tangent plane is arranged on a circumferential face of the base support, and a snap-fit groove is formed at one end of the positioning plate away from the base support;
the positioning protrusion extends into an inner wall of the insertion end, and the latch tongue is connected to an inner wall of the snap-fit groove; and
a first magnet is fixedly mounted on an outer side of the top of the housing, a second magnet is fixedly mounted on an outer side of the positioning plate, the second magnet corresponds to the first magnet in position, and contact ends of the first magnet and the second magnet attract each other magnetically.

In a preferred embodiment of the present invention, a support connector is fixedly arranged at a bottom of the housing, and the wireless charging coil is mounted inside the housing.

In a preferred embodiment of the present invention, the pressing keys are slidably connected to inner walls of the housing at both ends thereof, a spring locating pin is fixedly arranged on either of the pressing keys, and the spring is mounted between the two spring locating pins.

In a preferred embodiment of the present invention, the wireless charging coil is electrically connected to a PBCA board, and the PBCA board is arranged inside the base support.

In a preferred embodiment of the present invention, a sealing plate is fixedly mounted at one end of the positioning plate away from the base support.

Additional aspects and advantages of the present invention will be set forth partially in the following description, which will become obvious in the following description, or may be learned by practice of the present invention.

When the rear end of the mobile phone protection shell is sufficiently close to the top of the housing, the annular first magnet and the second magnet begin to attract each other magnetically; during magnetic attraction, the positioning protrusion of the housing extends into the insertion end, and the first tangent plane of the latch tongue comes into contact with the second tangent plane; under the influence of magnetic attraction, the latch tongue moves toward a center due to an acting force from the first tangent plane and the second tangent plane, the spring is compressed, and the latch tongue extends into the snap-fit groove; when the first magnet comes into contact with the second magnet, the first tangent plane and the second tangent plane are no longer in contact with each other, and the spring rebounds the latch tongue, such that an end portion of the latch tongue is snap-fitted into the snap-fit groove; the entire operation process requires only bringing the rear end of the mobile phone protection shell close to a top of the base support, and an effect of blind operation is achieved;
a spring rebounds the latch tongue, such that an end portion of the latch tongue is snap-fitted into the snap-fit groove, and the mobile phone protection shell is hardly detached from the base support, which enhances anti-vibration performance of the mobile phone holder; and
360-degree rotation of the present invention is allowed without disassembly.

### BRIEF DESCRIPTION OF THE DRAWINGS

What is described above and/or additional aspects and advantages of the present invention will become apparent and easy to understand from the following description of the examples in combination with the drawings below:
FIG. 1 is a perspective view I of a base support in a magnetic mobile phone holder capable of automatic positioning and locking.
FIG. 2 is a perspective view II of a base support in a magnetic mobile phone holder capable of automatic positioning and locking.
FIG. 3 is a rear view of a positioning plate and a mobile phone protection shell in a magnetic mobile phone holder capable of automatic positioning and locking.
FIG. 4 is a front view of a positioning plate and a mobile phone protection shell in a magnetic mobile phone holder capable of automatic positioning and locking.
FIG. 5 is a sectional view of a positioning plate and a mobile phone protection shell in a magnetic mobile phone holder capable of automatic positioning and locking.
FIG. 6 is a sectional view of a positioning plate in a magnetic mobile phone holder capable of automatic positioning and locking.
FIG. 7 is a perspective view of a base support, a positioning plate, and a mobile phone protection shell in a magnetic mobile phone holder capable of automatic positioning and locking.
FIG. 8 is a sectional view of a base support in a magnetic mobile phone holder capable of automatic positioning and locking.
FIG. 9 is a schematic diagram of an internal structure of a base support in a magnetic mobile phone holder capable of automatic positioning and locking.
FIG. 10 is a schematic diagram of connection between a latch tongue and a snap-fit groove in a magnetic mobile phone holder capable of automatic positioning and locking.
FIG. 11 is a schematic diagram of disassembly of a magnetic mobile phone holder capable of automatic positioning and locking.

Reference numerals in the figures: base support 100, housing 110, positioning protrusion 111, positioning groove 112, support connector 120, first magnet 130, pressing key 140, latch tongue 141, first tangent plane 142, spring locating pin 143, wireless charging coil 150, PBCA board 151, spring 160, positioning plate 200, second magnet 210, insertion end 230, snap-fit groove 240, second tangent plane 250, sealing plate 260, and mobile phone protection shell 300.

### DETAILED DESCRIPTION OF THE EMBODIMENTS

Examples of the present invention are described in detail below, and examples of the examples are shown in accompanying drawings, throughout which identical or similar reference numerals denote identical or similar elements or elements having identical or similar functions. The examples described with reference to the accompanying drawings are exemplary and only intended to explain the present invention, instead of being construed as limiting the present invention.

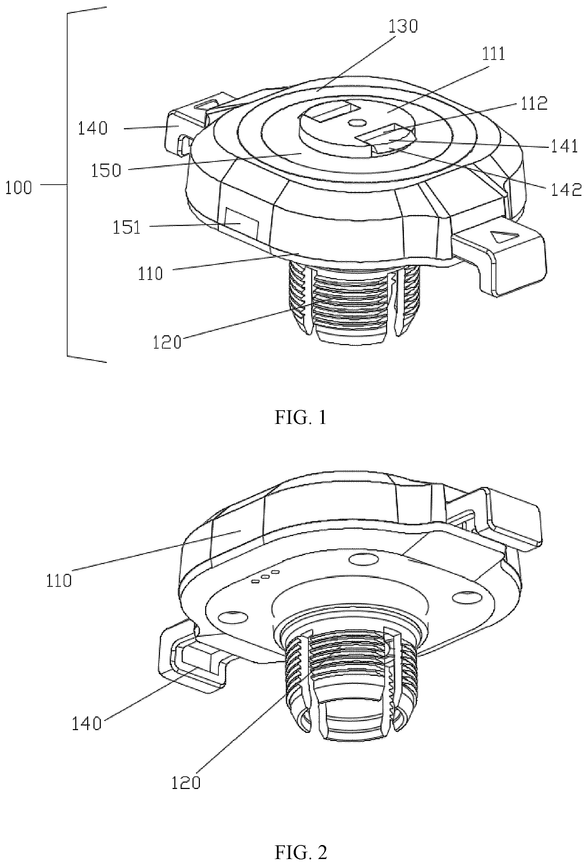

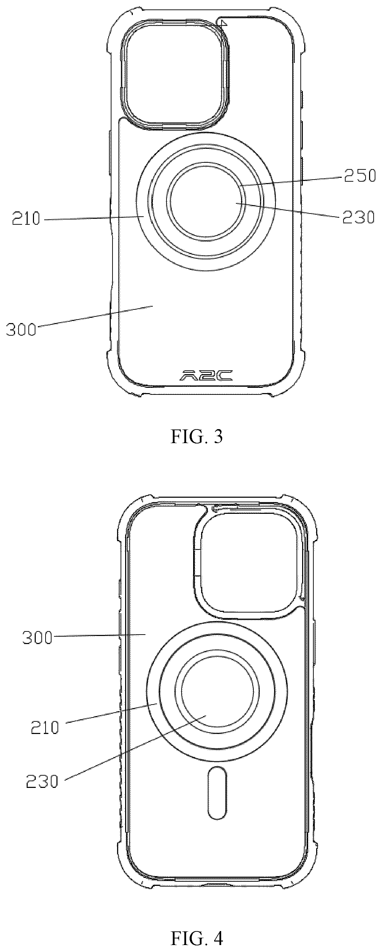

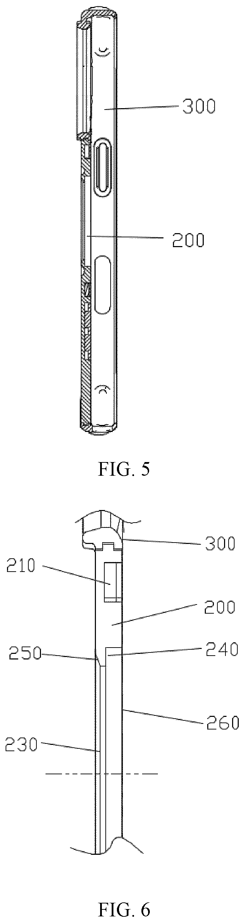

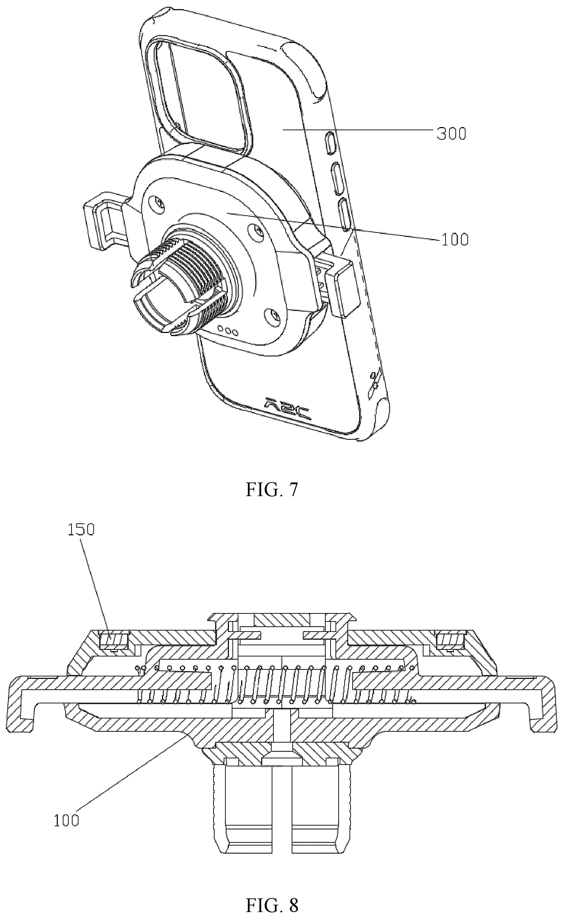

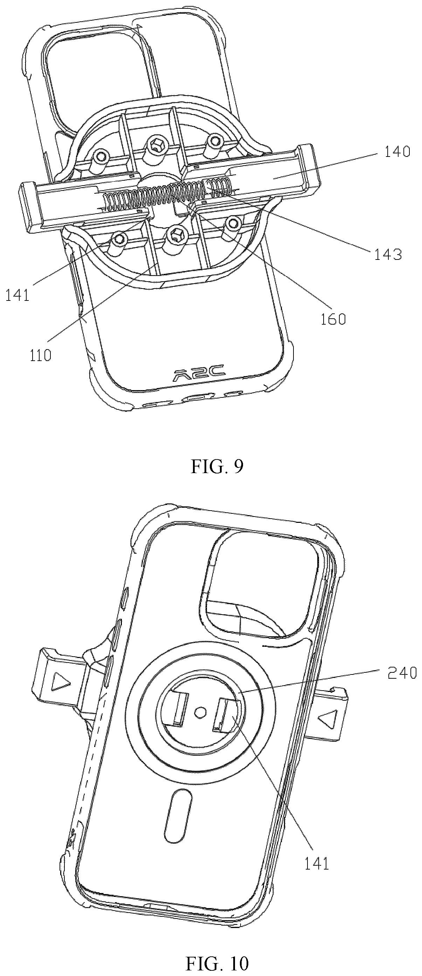

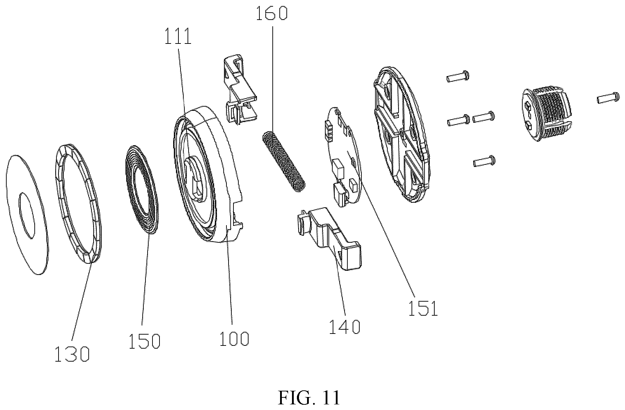

With reference to FIGs. 1-11, a magnetic mobile phone holder capable of automatic positioning and locking includes a base support 100, a positioning plate 200, and a mobile phone protection shell 300, where the positioning plate 200 is fixedly mounted on the mobile phone protection shell 300, and the base support 100 is connected to the positioning plate 200;
the base support 100 includes a housing 110, a positioning protrusion 111 is arranged at a top of the housing 110, and positioning grooves 112 are formed at both ends of the positioning protrusion 111; the positioning protrusion 111 extends into an insertion end 230 to position the mobile phone protection shell 300, and the positioning grooves 112 are formed to position latch tongues 141;
an elastically compressible pressing key 140 is mounted at either of two inner ends of the housing 110, the latch tongue 141 is fixedly arranged on the pressing key 140, the latch tongue 141 extends into the positioning groove 112, a top of the latch tongue 141 is flush with a top of the positioning protrusion 111, and a first tangent plane 142 is arranged at one end of the latch tongue 141 away from the positioning protrusion 111; the pressing key 140 is manually moved to move the latch tongue 141, such that the latch tongue 141 is disengaged from an inner wall of a snap-fit groove 240;
the insertion end 230 is arranged at one end of the positioning plate 200 close to the base support 100, a second tangent plane 250 is arranged on a circumferential face of the base support 100, and the snap-fit groove 240 is formed at one end of the positioning plate 200 away from the base support 100;
a wireless charging coil 150 is electrically connected to a PBCA board 151, the PBCA board 151 is arranged inside the base support 100, and the wireless charging coil 150 as a wireless charging pad enables wireless charging of a mobile phone;
the positioning protrusion 111 extends into an inner wall of the insertion end 230, and the latch tongue 141 is connected to the inner wall of the snap-fit groove 240; and
a first magnet 130 is fixedly mounted on an outer side of the top of the housing 110, a second magnet 210 is fixedly mounted on an outer side of the positioning plate 200, the second magnet 210 corresponds to the first magnet 130 in position, and contact ends of the first magnet 130 and the second magnet 210 attract each other magnetically; when a rear end of the mobile phone protection shell 300 is sufficiently close to the top of the housing 110, the annular first magnet 130 and the second magnet 210 begin to attract each other magnetically; during magnetic attraction, the positioning protrusion 111 of the housing 110 extends into the insertion end 230, and the first tangent plane 142 of the latch tongue 141 comes into contact with the second tangent plane 250; under the influence of magnetic attraction, the latch tongue 141 moves toward a center due to an acting force from the first tangent plane 142 and the second tangent plane 250, a spring 160 is compressed, and the latch tongue 141 extends into the snap-fit groove 240.

A support connector 120 is fixedly arranged at a bottom of the housing 110, and the wireless charging coil 150 is mounted inside the housing 110.

The pressing keys 140 are slidably connected to inner walls of the housing 110 at both ends thereof, a spring locating pin 143 is fixedly arranged on either of the pressing keys 140, and the spring 160 is mounted between the two spring locating pins143.

A sealing plate 260 is fixedly mounted at one end of the positioning plate 200 away from the base support 100, and the sealing plate 260 enhances surface flatness of rear ends of the mobile phone protection shell 300 and the positioning plate 200.

The working principle of the present invention is as follows: the mobile phone protection shell 300 is mounted on the mobile phone, and the base support 100 is fixed to the base through the support connector 120; to place the mobile phone on the base support 100, when the rear end of the mobile phone protection shell 300 is sufficiently close to the top of the housing 110, the annular first magnet 130 and the second magnet 210 begin to attract each other magnetically; during magnetic attraction, the positioning protrusion 111 of the housing 110 extends into the insertion end 230, and the first tangent plane 142 of the latch tongue 141 comes into contact with the second tangent plane 250; under the influence of magnetic attraction, the latch tongue 141 moves toward a center due to an acting force from the first tangent plane 142 and the second tangent plane 250, the spring 160 is compressed, and the latch tongue 141 extends into the snap-fit groove 240; when the first magnet 130 comes into contact with the second magnet 210, the first tangent plane 142 and the second tangent plane 250 are no longer in contact with each other, and the spring 160 rebounds the latch tongue 141, such that an end portion of the latch tongue 141 is snap-fitted into the snap-fit groove 240;
the entire operation process requires only bringing the rear end of the mobile phone protection shell 300 close to a top of the base support 100; and
to remove the mobile phone from the base support 100, the user holds the mobile phone protection shell 300 with one hand first, and then presses the pressing keys 140 using two fingers of the other hand, which causes the pressing keys 140 to drive the latch tongues 141 to move inside the positioning grooves 112; and when the latch tongues 141 are disengaged from the snap-fit grooves 240, the mobile phone and the mobile phone protection shell 300 may be directly removed from the base support 100.

Although the examples of the present invention have been shown and described, it is to be understood that those of ordinary skill in the art may make various changes, modifications, replacements, and variations to these examples without departing from the principle and objective of the present invention, and the scope of the present invention is limited by the appended claims and their equivalents.

## Claims

1. A magnetic mobile phone holder capable of automatic positioning and locking, comprising a base support (100), a positioning plate (200), and a mobile phone protection shell (300), wherein the positioning plate (200) is fixedly mounted on the mobile phone protection shell (300), and the base support (100) is connected to the positioning plate (200), **characterized in that**:
the base support (100) comprises a housing (110), a positioning protrusion (111) is arranged at a top of the housing (110), and positioning grooves (112) are formed at both ends of the positioning protrusion (111);
an elastically compressible pressing key (140) is mounted at either of two inner ends of the housing (110), a latch tongue (141) is fixedly arranged on the pressing key (140), the latch tongue (141) extends into the positioning groove (112), a top of the latch tongue (141) is flush with a top of the positioning protrusion (111), and a first tangent plane (142) is arranged at one end of the latch tongue (141) away from the positioning protrusion (111);
an insertion end (230) is arranged at one end of the positioning plate (200) close to the base support (100), a second tangent plane (250) is arranged on a circumferential face of the base support (100), and a snap-fit groove (240) is formed at one end of the positioning plate (200) away from the base support (100);
the positioning protrusion (111) extends into an inner wall of the insertion end (230), and the latch tongue (141) is connected to an inner wall of the snap-fit groove (240); and
a first magnet (130) is fixedly mounted on an outer side of the top of the housing (110), a second magnet (210) is fixedly mounted on an outer side of the positioning plate (200), the second magnet (210) corresponds to the first magnet (130) in position, and contact ends of the first magnet (130) and the second magnet (210) attract each other magnetically.

2. The magnetic mobile phone holder capable of automatic positioning and locking according to claim 1, **characterized in that** a support connector (120) is fixedly arranged at a bottom of the housing (110), and a wireless charging coil (150) is mounted inside the housing (110).

3. The magnetic mobile phone holder capable of automatic positioning and locking according to claim 1, **characterized in that** the pressing keys (140) are slidably connected to inner walls of the housing (110) at both ends thereof, a spring locating pin (143) is fixedly arranged on either of the pressing keys (140), and the spring (160) is mounted between the two spring locating pins (143).

4. The magnetic mobile phone holder capable of automatic positioning and locking according to claim 1, **characterized in that** the wireless charging coil (150) is electrically connected to a PBCA board (151), and the PBCA board (151) is arranged inside the base support (100).

5. The magnetic mobile phone holder capable of automatic positioning and locking according to claim 1, **characterized in that** a sealing plate (260) is fixedly mounted at one end of the positioning plate (200) away from the base support (100).
